# EUROPEAN PATENT SPECIFICATION

(11) **EP 1 243 093 B1**
(45) Date of publication and mention of the grant of the patent: **28.06.2006**
(21) Application number: 00987532.9
(22) Date of filing: 19.12.2000
(51) Int. Cl.: H04K 1/00, H04L 9/32

(54) **HANDLING A SECRET KEY**
VERWALTUNG EINES GEHEIMSCHLÜSSELS
GESTION D'UNE CLE SECRETE

(30) Priority: 23.12.1999 FI 992778
(43) Date of publication of application: 25.09.2002
(73) Proprietor: Setec Oy, 01740 Vantaa (FI)
(72) Inventor: PAATERO, Lauri, FIN-00970 Helsinki (FI); ASIKAINEN, Teemu, FIN-00170 Helsinki (FI); RANTALA, Janne, FIN-02260 Espoo (FI)
(74) Representative: Holmström, Stefan Mikael
(86) International application number: PCT/FI2000/001112
(87) International publication number: WO 2001/048963

(56) References cited:
- EP-A1- 0 285 520
- WO-A1-99/46881
- US-A- 4 935 962
- US-A- 5 347 580
- US-A- 5 623 637
- US-A- 5 867 577
- US-A- 5 974 148
- US-A- 5 999 629

## Description

The present invention relates to handling a secret key such that no external attacker is able to find out the secret key or secret keys of a device. The invention mainly relates to handling a secret key for authenticating a device, such as a smart card. It is to be noted, however, that although the invention will mainly be described in connection with smart cards and authentication operations, the invention can be applied in other connections as well.

The authentication of known smart cards is usually based on a request-response procedure. A smart-card-specific secret key used by the smart card in the authentication is then stored in the memory of the smart card. In connection with authentication, the authenticating equipment transmits an input to the smart card. The smart card calculates a response on the basis of the input, the secret key and a predetermined authentication function, and supplies the response to the authenticating device. The secret key employed by the smart card and the authentication function are also known either to the authenticating device or, for instance, to an authentication centre communicating with the authenticating device. Consequently, the authenticating device or the authenticating centre is able to carry out a similar calculating operation to that performed by the smart card, in which case the authenticating device is informed of the response the smart card should produce to the input transmitted thereto. If the response received by the authenticating device from the smart card is correct, the authentication equipment determines that the authentication of the smart card has succeeded. In connection with the known smart cards, the authentication operation may also be reverse to what has been described above. In such a case, the smart card authenticates the external equipment, which means that the input travels from the smart card to the external equipment and the response, in turn, from the external equipment to the smart card. It is thus the smart card which checks that it has received a correct response to the input it produced.

Devices comprising a secret key are previously known which comprise a processor to control the operation of the device, a memory connected to the processor through a bus, and an auxiliary processor connected to the memory and the processor through said bus. In these known devices the secret key is stored in the memory. The calculating operations necessary for producing the response are, however, carried out by the auxiliary processor of the device, which means that in order to produce the response, the secret key has to be transmitted through the aforementioned bus from the memory to the auxiliary processor through the processor. Transmitting the secret key through the bus from the memory to the auxiliary processor is a procedure which may provide an external attacker with such information on the basis of which the attacker is able to find out the secret key. If the external attacker succeeds in finding out the secret key, this means that the attacker is able to clone the device at issue by producing another device which uses the same secret key to that used by the original device. US-5 999 629 discloses an example of a data encryption security module where the secret keys are transmitted through the bus of the module.

An object of the present invention is to alleviate the problem described above and to provide a solution which enables it to make it even more difficult for an external attacker to find out a secret key of a particular device. This object is achieved by a method of the invention as defined in independent claim 1. An object of the invention is further achieved by a device according to independent claim 3.

The idea underlying the invention is that it is even more difficult for the external attacker to find out the secret key when the secret key is never supplied in an uncoded form on the bus of the device connecting the memory of the device to the auxiliary processor. The external attacker thus gains nothing by monitoring the traffic on the bus. According to the invention, the secret key is stored encoded in the memory. The secret key is thus transmitted in an encoded form from the memory to the auxiliary processor through the bus. The external attacker does not know how the secret key has been encoded, which is why the attacker will not benefit from finding out the encoded secret key even if he or she succeeded in it.

After the encoded secret key has been transmitted to the auxiliary processor, it is decoded, i.e. the secret key is generated from the encoded key, and transmitted to the internal key register of the auxiliary register through the internal bus arranged in the auxiliary processor. It is thus unnecessary to handle the secret key in an uncoded form outside the auxiliary processor. The greatest advantage of the solution of the invention is thus that it is even more difficult for the external attacker to find out the secret key of the device.

Preferred embodiments of the method and the device of the invention are disclosed in the attached dependent claims 2 and 4 to 6.

The invention will be described in closer detail in the following by way of example and with reference to the accompanying drawings, in which
Figure 1 illustrates a known smart card,
Figure 2 illustrates a first preferred embodiment of a device of the invention,
Figure 3 illustrates a second preferred embodiment of the device of the invention, and
Figure 4 is a flow diagram showing a first preferred embodiment of the method of the invention.

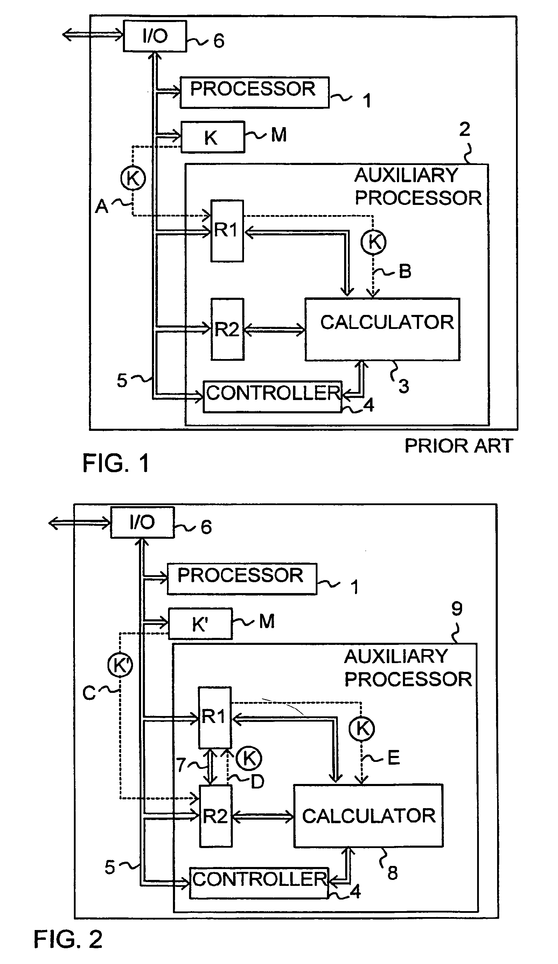

Figure 1 illustrates a known smart card. The smart card of Figure 1 comprises a processor 1, a memory M and an auxiliary processor 2 which are interconnected through a bus 5. A connecting circuit 6 through which the smart card can be connected through its bus 5 to external equipment is further connected to the bus. In connection with authentication, an input is transmitted from the external equipment which is transmitted to the auxiliary processor 2, through the bus 5. In response to receiving the input, the auxiliary processor 2 produces a response by means of the input, a secret key K and a predetermined authentication algorithm. The response is transmitted from the auxiliary processor to the external equipment through the bus 5 and the connecting circuit 6.

For authenticating the smart card, the secret key K is stored in its memory M and retrieved to a key register R1 of the auxiliary processor through the bus 5 (arrow A). In connection with the authentication, the input is transmitted from the external equipment to a data register R2 of the auxiliary processor 2 through the bus 5. A calculator 3 of the auxiliary processor 2 then retrieves the key K from the key register R1 (arrow B) and the input from the data register R2, after which the calculator calculates the response on the basis of a predetermined authentication function, and the auxiliary processor supplies the response to the data register R2. From the data register R2, the response is forwarded to the external equipment through the bus 5.

The greatest disadvantage of the smart card described above is the way in which the secret key is handled. The secret key K is smart-card-specific, i.e. a unique secret key is stored for each smart card. Hence, only one smart card exists that produces a predetermined response to an input supplied to a particular smart card in connection with authentication. The fact that the secret key is transmitted from the memory to the auxiliary processor through the bus 5 provides the external attacker with an opportunity to try to find out the secret key. If the attacker succeeds in finding out the secret key, this means that the external attacker is (at least in theory) able to produce another smart card (a clone) which uses the same secret key as the original smart card.

Figure 2 illustrates a first preferred embodiment of a device of the invention. In the following, it is assumed by way of example that the device of Figure 2 is a smart card and that the secret key of the smart card is used particularly in connection with authentication.

The smart card of Figure 2 comprises a memory M, such as an EEPROM memory, with an encoded secret key K' being stored therein. In practice, the secret key can be encoded e.g. by applying a predetermined coding function f to calculate the encoded secret key K' on the basis of the secret key K, in other words K' = f(K).

In order to provide a calculator 8 of an auxiliary processor 9 with the secret key in connection with authentication, the encoded secret key K' is retrieved from the memory M to a data register R2 through a bus 5 (arrow C). The calculator 8 is able to retrieve the encoded secret key K' from the data register R2, and to calculate the secret key K by applying an inverse function f of the coding function f, in other words K = f(K'). After the calculating operation, the auxiliary processor supplies the secret key K to the data register R2. In order to make the handling of the key secure enough, the above-mentioned coding function f and the inverse function thereof should be secret functions unavailable to the external attacker.

According to the invention, the auxiliary processor 5 comprises an internal bus 7 which enables the auxiliary processor to transmit the calculated secret key K from the data register R2 to a key register R1 (arrow D). It is thus unnecessary to transmit the secret key K through the bus 5 of the smart card, the advantage being that it is even more difficult for the external attacker to find out the secret key.

The calculator 8 is able to retrieve the secret key K from the key register R1 in connection with the authentication in a similar manner to that described in connection with the known smart card of Figure 1.

According to the invention, the secret key of the smart card can be changed by replacing it by a new secret key. The external equipment then supplies the new secret key to the smart card. The new secret key may be encoded when being supplied to the smart card. The encoded new secret key is then supplied to the data register R2 of the auxiliary processor through the bus 5. Prior to this (e.g. when the smart card was connected to the external equipment), the secret key K used by the auxiliary processor has already been stored in the key register thereof. A controller 4 of the auxiliary processor is also informed by the processor 1 of the smart card that a new encoded secret key is stored in its data register R2. The auxiliary processor then first handles the new secret key as if it were an input associated with authentication. Consequently, the auxiliary processor decodes the new secret key by the secret key in the key register and the authentication function employed by the auxiliary processor. When the new secret key has been found out, the auxiliary processor encodes it by the coding function f, after which the new encoded secret key is transmitted from the auxiliary processor to the memory M, where it replaces the previous encoded secret key.

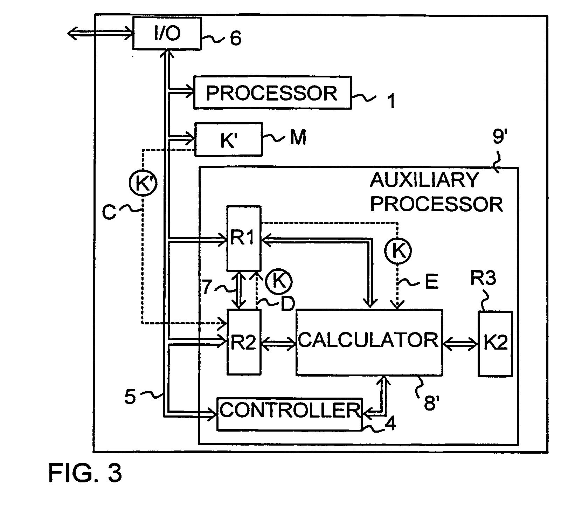

Figure 3 illustrates a second preferred embodiment of the device to be authenticated in accordance with the invention. In the following, it is assumed by way of example that the device to be authenticated of Figure 3 is a smart card.

The smart card of Figure 3 is roughly similar to that of Figure 2, i.e. an auxiliary processor 9' of the smart card of Figure 3 also comprises the internal bus 7 through which the secret key K can be transmitted from the data register R2 to the key register R1. However, the embodiment of Figure 3 differs from the case of Figure 2 in that in the embodiment of Figure 3, the auxiliary processor 9' comprises an additional register, i.e. a second key register R3. In the second key register, a second secret key K2 is stored. The secret key K2 is utilized by a calculator 8' for calculating the secret key K used in the authentication.

In order to enable the authentication, the encoded secret key K' is retrieved from the memory M. The key is encoded by expressly using the second secret key K2 stored in the second key register R3 and the predetermined coding function. The encoded secret key K' is supplied to the data register R2 through the bus 5 (arrow C). Next, the calculator 8' calculates the secret key K by means of the encoded secret key K', the second secret key K2 and the inverse function of said predetermined coding function, and the auxiliary processor then supplies the secret key K to the data register R2. From the data register R2, the secret key K is transmitted through the bus 7 to the key register R1 (arrow D), from which the calculator 8' can retrieve it in connection with the authentication (arrow E).

Compared to the embodiment of Figure 2, the advantage of the embodiment of Figure 3 is that the function employed by the calculator to calculate the secret key K from the encoded key K', i.e. the decoding function, may be public. In other words, the external attacker is unable to make use of the fact that he or she knows the function employed in calculating the secret key K since the external attacker does not know the second secret key K2 located in the second key register R3. The external attacker is thus unable to find out the secret key K employed in the authentication even if the attacker knew both the encoded secret key K' and the aforementioned function.

The embodiment of Figure 3 also enables several encoded secret keys for different purposes to be stored in the memory M. The decoding of all these encoded secret keys necessitates the second secret key K2 located in the second key register R3. The auxiliary processor 9' can thus decode and store in the key register the secret key needed at a given time as described above.

The embodiment of Figure 3 also enables the secret key (or secret keys) stored encoded in the memory M to be changed as described in connection with Figure 2. On the other hand, it is probable that the second secret key stored in the second key register R3 hardly ever needs to be changed since the second secret key may only be "known" to the smart card, i.e. no external device needs to know what the second secret key is. Neither is the second key ever transmitted outside the auxiliary processor, so it is improbable that the external attacker succeeds in finding out the second secret key.

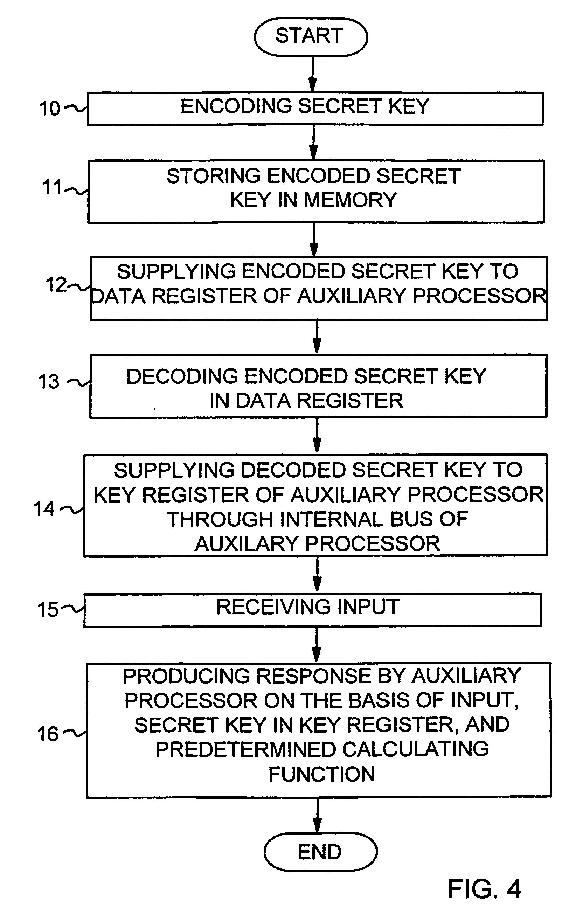

Figure 4 is a flow diagram showing a first preferred embodiment of the method of the invention. The flow diagram of Figure 4 can be utilized e.g. in the authentication of the smart cards described in connection with Figures 2 or 3.

In block 10, the secret key of the smart card is encoded by the predetermined coding function. The encoded secret key is stored in the memory of the smart card in block 11.

When the smart card is connected to the external equipment and it becomes relevant to authenticate the smart card, the encoded secret key is retrieved from the memory in block 12 and transmitted to the data register of the auxiliary processor. The auxiliary processor then, in block 13, decodes the encoded secret key by the inverse function of the coding function. Next, the decoded secret key, i.e. the secret key, is transmitted to the key register of the auxiliary processor through the internal bus of the auxiliary processor.

In block 15, the smart card receives the input from the external equipment. The input is transmitted to the data register of the auxiliary processor through the bus of the smart card. In block 16, the auxiliary processor produces a response to the input received by the smart card. The auxiliary processor produces the response on the basis of the predetermined calculating function and the secret key stored in the key register. The auxiliary processor stores the response in its data register, from which the response is transmitted to the external equipment through the bus of the smart card.

As will be apparent from the above description, the secret key of the smart card never needs to be supplied to the bus of the smart card since all steps associated with handling the secret key (blocks 13 to 16) can be implemented as internal operations of the auxiliary processor.

It is to be understood that the above description and the related drawings are only intended to illustrate the present invention. It will be obvious to one skilled in the art that the invention can be varied and modified in different ways without deviating from the scope of the invention disclosed in the attached claims.

## Claims

1. A method of handling a secret key in a device comprising a memory (M), a processor (1) and an auxiliary processor (9, 9') connected to the memory (M) through a bus (5), the method comprising:
encoding a secret key (K) and storing the encoded secret key (K') in said memory (M), and
producing a response by the auxiliary processor (9, 9') on the basis of an input, said secret key (K) and a predetermined calculating function,
**characterized by** comprising the steps of:
retrieving said encoded secret key (K') from the memory (M) and supplying it to a data register (R2) of the auxiliary processor (9, 9') through said bus (5), and
decoding the encoded secret key (K') stored in the data register (R2) by a predetermined decoding function, supplying the decoded secret key (K) to a key register (R1) of the auxiliary processor through an internal bus (7) of the auxiliary processor, and retrieving said secret key from the key register (R1) for producing said response by internal operations of the auxiliary processor (9, 9') on the basis of said input, said secret key (K) and said predetermined calculating function.

2. A method as claimed in claim 1, **characterized by** further comprising:
storing a second secret key (K2) necessary for decoding the encoded secret key (K') in the auxiliary processor (9'), and
retrieving said second secret (K2) key to be employed by the decoding function of the auxiliary processor (9'), and decoding the encoded secret key by means of said decoding function and the second secret key (K2).

3. A device comprising:
a processor (1) controlling the operation of the device,
a memory (M) connected to the processor (1) through a bus (5), and
an auxiliary processor (9, 9') connected to the processor (1) and the memory (M) through said bus (5), the auxiliary processor comprising calculating means (8, 8') for producing a response on the basis of a secret key (K), a predetermined calculating function and an input transmitted to the auxiliary processor (9, 9') through said bus (5), and means for forwarding said response through said bus (5), **characterized in that**
said secret key (K) is stored encoded (K') in said memory (M),
said auxiliary processor (9, 9') comprises a data register (R2) adapted to receive said encoded secret key (K') from the memory (M) through said bus (5),
the calculating means (8, 8') of the auxiliary processor (9, 9') comprise a decoding function adapted to calculate the secret key (K) from the encoded secret key (K') in the data register (R2), and
the auxiliary processor (9, 9') comprises a key register (R1) and an internal bus (7) through which the auxiliary processor (9, 9') is adapted to store the secret key (K) in said key register (R1), from which the calculating function of the calculating means (8, 8') is adapted to retrieve said secret key (K).

4. A device as claimed in claim 3, **characterized in that** said device is a smart card which is adapted to produce said response in response to the input supplied to the smart card in connection with authentication.

5. A device as claimed in claim 3 or 4, **characterized in that**
said auxiliary processor (9') comprises a second key register (R3) wherein a second secret key (K2) necessary for decoding the encoded secret key (K') is stored, and
the decoding function of the calculating means (8') is adapted to retrieve said second secret key (K2) from the second key register (R3) in order to calculate the secret key (K) necessary for producing the response from the encoded secret key (K').

6. A device as claimed in any one of claims 3 to 5, **characterized in that**
several encoded secret keys for different functions are stored in said memory (M), and
said processor (1) comprises means adapted to selecting and transmit an encoded secret key associated with a particular function from the memory (M) to the data register (R2) of the auxiliary processor (9, 9'), whereby the auxiliary processor (9, 9') is adapted to decode said encoded secret key selected by the processor (1), and the calculating function of the auxiliary processor (9, 9') is adapted to employ the decoded secret key in order to produce said response.

## Patentansprüche

1. Verfahren zur Verwaltung eines Geheimschlüssels in einer Vorrichtung mit einem Speicher (M), einem Prozessor (1) und einem Hilfsprozessor (9, 9'), der mit dem Speicher (M) über einen Bus (5) verbunden ist, wobei das Verfahren die folgenden Schritte aufweist:
Codieren eines Geheimschlüssels (K) und Speichern des codierten Geheimschlüssels (K') im Speicher (M), und
Erzeugen einer Antwort durch den Hilfsprozessor (9, 9') auf der Grundlage einer Eingabe, des Geheimschlüssels (K) und einer vorbestimmten Rechenfunktion,
**dadurch gekennzeichnet, daß** es die folgenden Schritte aufweist:
Abrufen des codierten Geheimschlüssels (K') aus dem Speicher (M) und dessen Zuführen zu einem Datenregister (R2) des Hilfsprozessors (9, 9') über den Bus, und
Decodieren des codierten Geheimschlüssels (K'), der im Datenregister (R2) gespeichert ist, durch eine vorbestimmte Decodierfunktion, Zuführen des decodierten Geheimschlüssels (K) zu einem Schlüsselregister (R1) des Hilfsprozessors über einen internen Bus (7) des Hilfsprozessors, und Abrufen des Geheimschlüssels aus dem Schlüsselregister (R1) zum Erzeugen der Antwort durch interne Operationen des Hilfsprozessors (9, 9') auf der Grundlage der Eingabe, des Geheimschlüssels (K) und der vorbestimmten Rechenfunktion.

2. Verfahren nach Anspruch 1, **dadurch gekennzeichnet, daß** es ferner die folgenden Schritte aufweist:
Speichern eines zweiten Geheimschlüssels (K2), der zum Decodieren des codierten Geheimschlüssels (K') im Hilfsprozessor (9') notwendig ist, und
Abrufen des zweiten Geheimschlüssels (K2), um durch die Decodierfunktion des Hilfsprozessors (9') verwendet zu werden, und Decodieren des codierten Geheimschlüssels mit Hilfe der Decodierfunktion und des zweiten Geheimschlüssels (K2).

3. Vorrichtung mit:
einem Prozessor (1), der den Betrieb der Vorrichtung steuert,
einem Speicher (M), der mit dem Prozessor (1) über einen Bus (5) verbunden ist, und
einem Hilfsprozessor (9, 9'), der mit dem Prozessor (1) und dem Speicher (M) über den Bus (5) verbunden ist, wobei der Hilfsprozessor aufweist: eine Recheneinrichtung (8, 8') zum Erzeugen einer Antwort auf der Grundlage eines Geheimschlüssels (K), einer vorbestimmten Rechenfunktion und einer Eingabe, die zum Hilfsprozessor (9, 9') über den Bus (5) gesendet werden, und eine Einrichtung zum Weiterleiten der Antwort über den Bus (5), **dadurch gekennzeichnet, daß**
der Geheimschlüssel (K) im Speicher (M) codiert (K') gespeichert ist,
der Hilfsprozessor (9, 9') ein Datenregister (R2) aufweist, das angepaßt ist, den codierten Geheimschlüssel (K') aus dem Speicher (M) über den Bus (5) zu empfangen,
die Recheneinrichtung (8, 8') des Hilfsprozessors (9, 9') eine Decodierfunktion aufweist, die angepaßt ist, den Geheimschlüssel (K) anhand des codierten Geheimschlüssels (K') im Datenregister (R2) zu berechnen, und
der Hilfsprozessor (9, 9') ein Schlüsselregister (R1) und einen internen Bus (7) aufweist, über den der Hilfsprozessor (9, 9') angepaßt ist, den Geheimschlüssel (K) im Schlüsselregister (R1) zu speichern, aus dem die Rechenfunktion der Recheneinrichtung (8, 8') angepaßt ist, den Geheimschlüssel (K) abzurufen.

4. Vorrichtung nach Anspruch 3, **dadurch gekennzeichnet, daß** die Vorrichtung eine Smartcard ist, die angepaßt ist, die Antwort als Reaktion auf die Eingabe zu erzeugen, die der Smartcard in Verbindung mit Authentifizierung zugeführt wird.

5. Vorrichtung nach Anspruch 3 oder 4, **dadurch gekennzeichnet, daß**
der Hilfsprozessor (9') ein zweites Schlüsselregister (R3) aufweist, in dem ein zum Decodieren des codierten Geheimschlüssels (K') notwendiger zweiter Geheimschlüssel (K2) gespeichert ist, und
die Decodierfunktion der Recheneinrichtung (8') angepaßt ist, den zweiten Geheimschlüssel (K2) aus dem zweiten Schlüsselregister (R3) abzurufen, um den zum Erzeugen der Antwort anhand des codierten Geheimschlüssels (K') notwendigen Geheimschlüssel (K) zu berechnen.

6. Vorrichtung nach einem der Ansprüche 3 bis 5, **dadurch gekennzeichnet, daß**
mehrere codierte Geheimschlüssel für unterschiedliche Funktionen im Speicher (M) gespeichert sind, und
der Prozessor (1) eine Einrichtung aufweist, die angepaßt ist, einen einer speziellen Funktion zugeordneten codierten Geheimschlüssel aus dem Speicher (M) auszuwählen und zum Datenregister (R2) des Hilfsprozessors (9, 9') zu senden, wodurch der Hilfsprozessor (9, 9') angepaßt ist, den durch den Prozessor (1) ausgewählten codierten Geheimschlüssel zu decodieren, und die Rechenfunktion des Hilfsprozessors (9, 9') angepaßt ist, den decodierten Geheimschlüssel zu verwenden, um die Antwort zu erzeugen.

## Revendications

1. Procédé de gestion d'une clé secrète dans un dispositif comportant une mémoire (M), un processeur (1) et un processeur auxiliaire (9, 9') connectés à la mémoire (M) via un bus (5), le procédé comportant les étapes consistant à :
coder une clé secrète (K) et mémoriser la clé secrète codée (K') dans ladite mémoire (M), et
produire une réponse par le processeur auxiliaire (9, 9') sur la base d'une entrée, de ladite clé secrète (K) et d'une fonction de calcul prédéterminée, **caractérisé en ce qu'**il comporte les étapes consistant à :
récupérer ladite clé secrète codée (K') de la mémoire (M) et délivrer celle-ci à un registre de données (R2) du processeur auxiliaire (9, 9') via ledit bus (5), et
décoder la clé secrète codée (K') mémorisée dans le registre de données (R2) par l'intermédiaire d'une fonction de décodage prédéterminée, délivrer la clé secrète décodée (K) à un registre de clé (R1) du processeur auxiliaire via un bus interne (7) du processeur auxiliaire, et récupérer ladite clé secrète du registre de clé (R1) pour produire ladite réponse par l'intermédiaire d'opérations internes du processeur auxiliaire (9, 9') sur la base de ladite entrée, de ladite clé secrète (K) et de ladite fonction de calcul prédéterminée.

2. Procédé selon la revendication 1, **caractérisé en ce qu'**il comporte en outre les étapes consistant à :
mémoriser une seconde clé secrète (K2) nécessaire pour décoder la clé secrète codée (K') dans le processeur auxiliaire (9'), et
récupérer ladite seconde clé secrète (K2) à utiliser par la fonction de décodage du processeur auxiliaire (9'), et décoder la clé secrète codée par l'intermédiaire de ladite fonction de décodage et de la seconde clé secrète (K2).

3. Dispositif comportant :
un processeur (1) commandant le fonctionnement du dispositif,
une mémoire (M) connectée au processeur (1) via un bus (5), et
un processeur auxiliaire (9, 9') connecté au processeur (1) et à la mémoire (M) via ledit bus (5), le processeur auxiliaire comportant des moyens de calcul (8, 8') pour produire une réponse sur la base d'une clé secrète (K), d'une fonction de calcul prédéterminée et d'une entrée transmise au processeur auxiliaire (9, 9') via ledit bus (5), et des moyens pour acheminer ladite réponse via ledit bus (5), **caractérisé en ce que**
ladite clé secrète (K) est codée (K') et mémorisée dans ladite mémoire (M),
ledit processeur auxiliaire (9, 9') comporte un registre de données (R2) adapté pour recevoir ladite clé secrète codée (K') en provenance de la mémoire (M) via ledit bus (5),
les moyens de calcul (8, 8') du processeur auxiliaire (9, 9') comportent une fonction de décodage adaptée pour calculer la clé secrète (K) depuis la clé secrète codée (K') dans le registre de données (R2), et
le processeur auxiliaire (9, 9') comporte un registre de clé (R1) et un bus interne (7) à travers lequel le processeur auxiliaire (9, 9') est adapté pour mémoriser la clé secrète (K) dans ledit registre de clé (R1), à partir duquel la fonction de calcul des moyens de calcul (8, 8') est adaptée pour récupérer ladite clé secrète (K).

4. Dispositif selon la revendication 3, **caractérisé en ce que** ledit dispositif est une carte à puce intelligente qui est adapté pour produire ladite réponse en réponse à l'entrée délivrée à la carte à puce intelligente relativement à une authentification.

5. Dispositif selon la revendication 3 ou 4, **caractérisé en ce que** ledit processeur auxiliaire (9') comporte un second registre de clé (R3) dans lequel une seconde clé secrète (K2) nécessaire pour décoder la clé secrète codée (K2) est mémorisée, et
la fonction de décodage des moyens de calcul (8') est adaptée pour récupérer ladite seconde clé secrète (K2) du second registre de clé (R3) afin de calculer la clé secrète (K) nécessaire pour produire la réponse depuis la clé secrète codée (K').

6. Dispositif selon l'une quelconque des revendications 3 à 5, **caractérisé en ce que**
plusieurs clés secrètes codées pour différentes fonctions sont mémorisées dans ladite mémoire (M), et
ledit processeur (1) comporte des moyens adaptés pour sélectionner et transmettre une clé secrète codée associée à une fonction particulière de la mémoire (M) au registre de données (R2) du processeur auxiliaire (9, 9'), de sorte que le processeur auxiliaire (9, 9') est adapté pour décoder ladite clé secrète codée sélectionnée par le processeur (1), et la fonction de calcul du processeur auxiliaire (9, 9') est adaptée pour utiliser la clé secrète codée afin de produire ladite réponse.
